Europäisches Patentamt

European Patent Office

Office européen des brevets

(19)

(11) Publication number: 0 400 851
A2

## (12) EUROPEAN PATENT APPLICATION

(21) Application number: 90305409.6

(22) Date of filing: 18.05.90

(51) Int. Cl.⁵: G06F 12/08

(30) Priority: 02.06.89 US 360500

(43) Date of publication of application:
05.12.90 Bulletin 90/49

(84) Designated Contracting States:
DE FR GB

(71) Applicant: Hewlett-Packard Company
Mail Stop 20 B-O, 3000 Hanover Street
Palo Alto, California 94304(US)

(72) Inventor: La Fetra, Ross V.
202 Calvert Drive, No. 129
Cupertino, California 95014(US)

(74) Representative: Colgan, Stephen James et al
CARPMAELS & RANSFORD 43 Bloomsbury
Square
London WC1A 2RA(GB)

(54) Efficient cache utilizing a store buffer.

(57) An efficient cache (2) utilizing a store buffer (21,22) includes an address tag (14) which contains address tags (121) and includes a data (30) which contains cache data. An index is used to address both the address tag (14) and the data RAM (30). In front of the data RAM (30) is placed a data register (22) and an address register (21). At the beginning of a write cycle a comparison is made between an address tag (121) portion of a data address and an address tag (121) obtained by accessing the address tag RAM (14) using an index portion (122) of the data address. If these are equal this indicates a data block including a data word into which data is to be written is extant in the data RAM (30). A valid signal is then forwarded to the address register (21) and the data register (22). Also at the beginning of the write cycle the data register (22) loads into the data RAM (30) data stored in the data register (22) at the address specified by the address register (21). New data to be written is placed at the input lines of the data register (22). The index portion (122) of the data address is place at the input lines of the address register (21). A valid signal from the address tag RAM (14) causes the address register (21) and the data register (22) to store the values on their respective input lines. If no valid signal is forthcoming, the address register (21) and data register (22) retain their current values, and a cache miss is

generated. A comparator (24) and two multiplexors (23,28) are added to the system to assure that data stored in the data register (22) is available to be read even before it is stored in the data RAM (30). The principles of equipping a cache with a data SRAM with store buffer may be used in other applications including partial word storage and access of dirty bits. Additionally the principles may be used in the construction of a multi-set associative cache.

Figure 2

## EFFICIENT CACHE UTILIZING A STORE BUFFER

### Background

The present invention relates to a computer system which utilizes a cache memory, the cache memory including a random access memory (RAM) with a store buffer.

Most modern computer systems include a central processing unit (CPU) and a main memory. The speed at which the CPU can decode and execute instructions and operands depends upon the rate at which the instructions and operands can be transferred from main memory to the CPU. In an attempt to reduce the time required for the CPU to obtain instructions and operands from main memory many computer systems include a cache memory or buffer between the CPU and main memory.

A cache memory is a small, high-speed buffer memory which is used to hold temporarily those portions of the contents of main memory which it is believed will be used in the near future by the CPU. The main purpose of a cache is to shorten the time necessary to perform memory accesses, either for data or instruction fetch. The information located in cache memory may be accessed in much less time than information located in main memory. Thus, a CPU with a cache memory needs to spend far less time waiting for instructions and operands to be fetched and/or stored.

A cache memory is made up of many blocks of one or more words of data. Each block has associated with it an address tag that uniquely identifies which block of main memory it is a copy of. Each time the processor makes a memory reference, an address tag comparison is made to see if a copy of the requested data resides in the cache. It the desired memory block is not in the cache, the block is retrieved from the main memory, stored in the cache and supplied to the processor.

In addition to using a cache to retrieve data from main memory, the CPU may also write data into the cache instead of directly to the main memory. When the processor desires to write data to the memory, the cache makes an address tag comparison to see if the data block into which data is to be written resides in the cache. If the data block exists in the cache, the data is written into the data block in the cache. In many systems a data "dirty bit" for the data block is then set. The dirty bit indicates that data in the data block has been modified, and thus before the data block is deleted from the cache the modified data must be written into main memory. If the data block into which data is to be written does not exist in the cache, the data block must be fetched into the cache or the data written directly into the main memory.

In typical applications at least two cache access cycles must be performed in order to write data into the cache. During the first cache access cycle an address tag comparison is made to see if the data block into which data is to be written resides in the cache. During the second cache access cycle, if the data block is found, the data is written into the appropriate data block in the cache. The present invention is an improvement over the prior art in that it allows data to be written into the cache in a single cache access cycle.

### Summary of the Invention

In accordance with the preferred embodiment of the present invention an efficient cache utilizing a store buffer is presented. The cache includes an address tag RAM which contains address tags and includes a data RAM which contains cache data. An index is used to address both the address tag RAM and the data RAM. In front of the data RAM is placed a data register and an address register. The data register and the address register are arranged to form a store buffer which facilitates the temporary storage of data to be placed into the data RAM. The existence of the data register and the address register allow a delayed write of data into the data RAM.

At the beginning of a write cycle a comparison is made between an address tag portion of a data address and an address tag obtained by accessing the address tag RAM using an index portion of the data address. If these are equal this indicates a data block (or data line) including a data word into which data is to be written is extant in the data RAM. A valid signal (or write enable signal) is then forwarded to the address register and the data register.

Also at the beginning of the write cycle (or before) the data register loads into the data RAM data stored in the data register at the address specified by the address register. New data to be written is placed at the input lines of the data register. The index portion of the data address is placed at the input lines of the address register. A valid signal from the address tag RAM causes the address register and the data register to store the values on their respective input lines. If no valid signal is forthcoming, the address register and data register retain their current values, and a cache miss is generated.

A comparator and two multiplexors are added to the system to assure that data stored in the data register is available to be read even before it is stored in the data RAM. As is further described in the Description of the Preferred Embodiment the principles of equipping a cache with a data RAM with store buffer may be used in other applications including partial word storage and access of dirty bits. Additionally the principles may be used in the construction of a multi-set associative cache.

## Brief Description of the Drawings

Figure 1 shows a computing system including a processor, a main memory and a cache in accordance with the preferred embodiment of the present invention.

Figure 2 shows the cache of Figure 1 utilizing a store buffer in accordance with a preferred embodiment of the present invention.

Figure 3 shows the organization of an address in accordance with a preferred embodiment of the present invention.

Figure 4 shows a random access memory (RAM) with a store buffer in accordance with the preferred embodiment of the present invention.

Figure 5 shows a multi-set associative cache utilizing store buffers in accordance with a preferred embodiment of the present invention.

Figure 6 shows dirty bit storage utilizing a store buffer in accordance with a preferred embodiment of the present invention.

Figure 7 shows a cache utilizing a store buffer in an arrangement allowing efficient partial storage of words.

## Description of the Preferred Embodiment

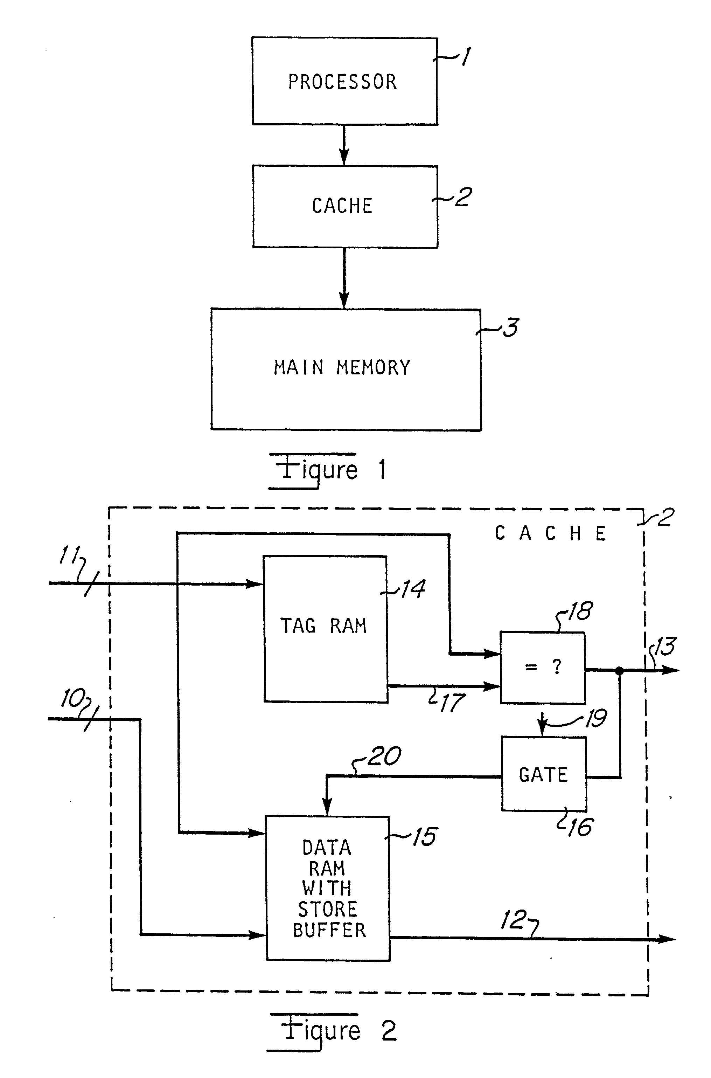

In Figure 1 a processor 1 utilizes data stored in main memory 3. In order to increase the rate at which processor 1 accesses data from main memory 3, a cache 2 is utilized. Cache 2 is a cache into which data may be written in a single cache access cycle in accordance with the preferred embodiment of the present invention.

In Figure 2, cache 2 is shown to include a tag random access memory (RAM) 14, a data RAM with store buffer (data store) 15, a comparator 18 and a gate 16.

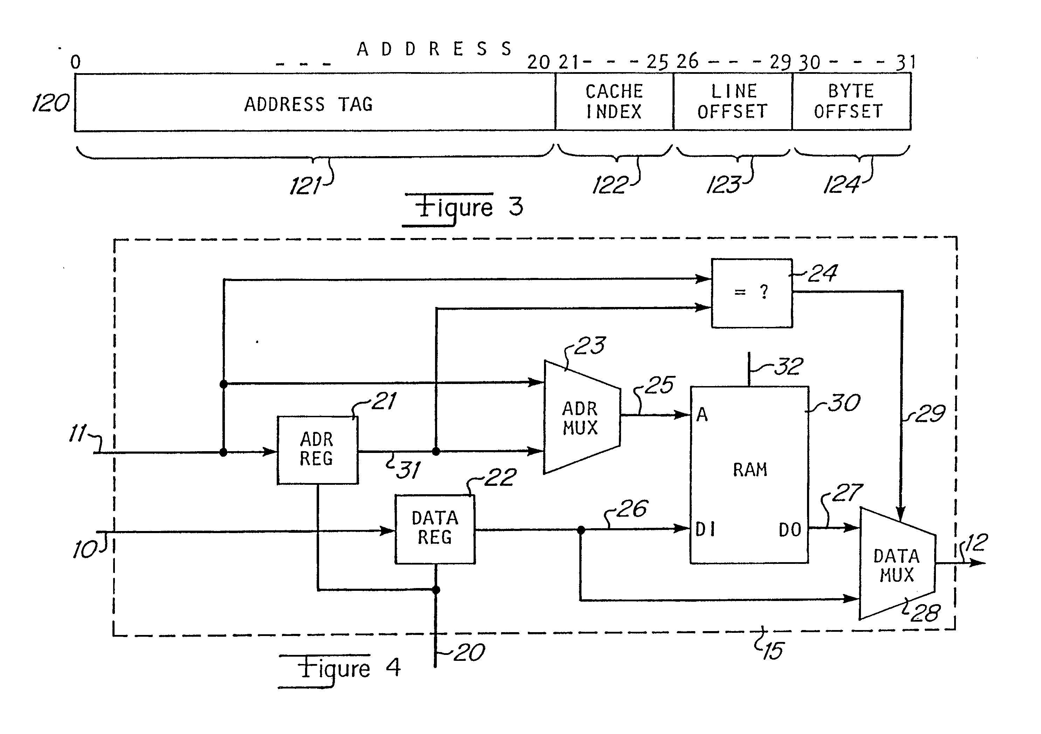

An address of data to be written is placed on lines 11. A typical organization for an address is shown in Figure 3. An address 120 is composed of, for example, 32 bits. Bit 0 is the most significant bit and bit 31 is the least significant bit. Bits 0-20 are used as an address tag 121. Bits 21-25 are used as a cache index 122. Bits 26-29 are used as a line offset 123. Bits 30 and 31 are used as a byte offset 124.

Within data store 15 data is stored in lines (also called blocks) of, for example, 16 words. Data store 15 holds a total of, for example, 32 lines of data. Each line of data within data store 15 is addressed using cache index 122. For each line of data stored in data store 15, an address tag is stored in tag RAM 14. The same cache index is used to address both the address tag in tag RAM 14 and the associated data line in data store 15.

When processor 1 desires to read data from cache 2, processor 1 places a read address of data to be read on lines 11. The cache index portion of the read address is used to access from tag RAM 14 the address tag of the current data line in data store 15 at the location specified by the cache index. Tag RAM 14 writes out the address tag on lines 17. Comparator 18 compares the address tag from tag RAM 14 and the address tag of the read address. If these are equal, comparator 18 produces a valid signal on a line 13. The valid signal is forwarded to gate 16. However, during a cache read cycle a control signal on an input 19 of gate 16 disables gate 16 not allowing the valid signal on line 13 to reach a write enable input line 20 of data store 15.

Simultaneous to the access of an address tag from tag RAM 14, the cache index portion and the line offset portion of the read address are used to access a data word within data store 15. This data word is placed on lines 12. When a valid signal is placed on line 13, the data word on lines 12 is returned to processor 1. When the address tag from tag RAM 14 and the address tag of the read address are not equal, an invalid signal is placed by comparator 18 on line 13 signifying that a cache miss has occurred. Then a line of data containing the word addressed by the read address is fetched from main memory 3 and placed in data store 15. The address tag for the fetched data line is simultaneously placed in tag RAM 14.

When processor 1 desires to write data to cache 2, processor 1 places a write address of data to be written on lines 11. Processor 1 also places the data to be written onto lines 10. The cache index portion of the write address is used to access from tag RAM 14 the address tag of the current data line in data store 15 at the location specified by the cache index. Tag RAM 14 writes out the address tag on lines 17. Comparator 18 compares the address tag from tag RAM 14 and the address tag of the write address. If these are equal, comparator 18 produces a valid signal on line 13. The valid signal is forwarded to gate 16.

During a cache write cycle the control signal on input 19 of gate 16 enables gate 16 allowing the valid signal on line 13 to reach write enable input line 20 of data store 15.

Simultaneous to the access of an address tag from tag RAM 14, the cache index portion and the line offset portion of the write address are used to address a memory location in data store 15. Also, the data on lines 10 is applied to the data input of data store 15. When a valid signal is placed on line 13, the data word on line 10 is placed in data store 15 at the memory location specified by the cache index portion and the line offset portion of the address lines. When the address tag from tag RAM 14 and the address tag of the read address are not equal, an invalid signal is placed by comparator 18 on line 13 signifying that a cache miss has occurred. Then a line of data containing the word addressed by the write address is fetched from main memory 3 and placed in data store 15. The address tag for the fetched data line is simultaneously placed in tag RAM 14. The new word may then be written into data store 15.

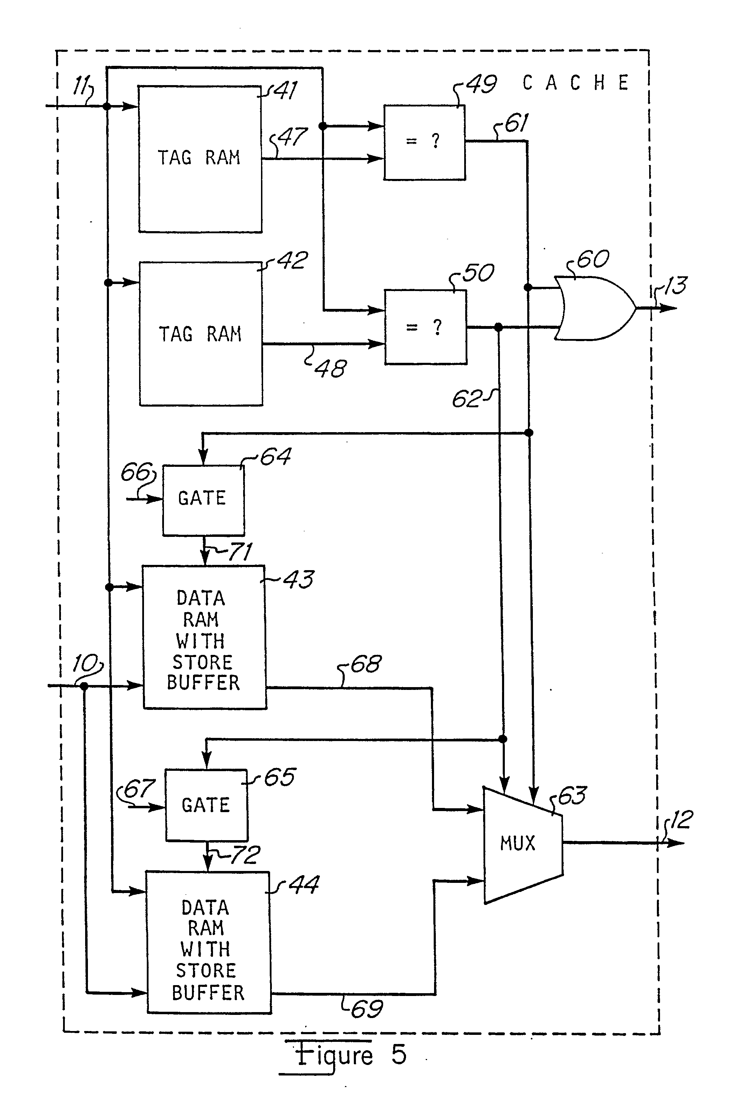

Figure 4 shows a block diagram of data store 15. Data store includes a RAM 30, an address register 21, a data register 22, an address multiplexor 23, a comparator 24 and a data multiplexor 28 connected as shown.

At the beginning of a read cycle, address multiplexor 23 selects the address on lines 11 directly, bypassing address register 21. The address is placed on an address input 25 of RAM 30. Comparator 24 compares the address on lines 11 with the address stored in address register 21 (placed on lines 31). If the values of the two addresses are equal, comparator 24 places a control signal on a line 29 which causes data multiplexor 28 to select data from data register 22 (also applied to data input 26) to be placed on lines 12. If the values of the two addresses are not equal, comparator 24 places a control signal on line 29 which causes' data multiplexor 28 to select data from data output 27 of RAM 30 to be placed on lines 12. The data on data output 20 contains data from the memory location of RAM 30 addressed by the address placed on address input 25 of RAM 30.

At the beginning of a write cycle, the address to be written is placed on address lines 11 and the data to be written is placed on lines 10. Address multiplexor 25 selects the address from address register 21 on lines 31 to be placed on address input 25 of RAM 30. A write enable 32 of RAM 30 is toggled storing the data in data register 22 at a location within RAM 30 specified by the address stored in address register 21. If a valid signal is placed on write enable input line 20 the address on lines 11 is entered into address register 21 and the data on lines 10 is entered into data register 22. If the valid signal is not placed on write enable input line 20, the contents of address register 21 and data register 22 remains unchanged and thus the data on lines 10 never makes it into RAM 30. At the next write cycle, the data in data register 22 is again stored at the location within RAM 30 specified by the addressed stored in address register 21.

In Figure 5 an alternate embodiment of cache 2 is shown. In Figure 5 cache 2 is shown embodied as a multi -set associative cache which includes a tag RAM 41, a tag RAM 42, a data RAM with store buffer (data store) 43, a data RAM with store buffer (data store) 44, a comparator 49, a comparator 50, a gate 64, a gate 65 a multiplexor 63 and a logical "OR" gate 60.

Within data store 43 and data store 44 data are stored in lines of, for example, 16 words. Data store 43 and data store 44 each hold a total of, for example, 32 lines of data. Each line of data within data store 43 and data store 44 is addressed using cache index 122. For each line of data stored in data store 43, an address tag is stored in tag RAM 41. For each line of data stored in data store 44, an address tag is stored in tag RAM 42. The same cache index is used to address simultaneously address tags in tag RAM 41 and tag RAM 42 and the associated data lines in data store 43 and data store 44.

When processor 1 desires to read data from cache 2, processor 1 places a read address of data to be read on lines 11. The cache index portion of the read address is used to access from tag RAM 41 the address tag of the current data line in data store 43 at the location specified by the cache index. Tag RAM 41 writes out the address tag on lines 47. Comparator 49 compares the address tag from stag RAM 41 and the address tag of the read address. If these are equal, comparator 49 produces a valid signal on a line 61. The valid signal is forwarded to multiplexor 63, logical OR gate 60 and gate 64. However, during a cache read cycle a control signal on an input 66 of gate 64 disables gate 64 not allowing the valid signal on line 61 to reach a write enable input line 71 of data store 43.

Simultaneous to the access of an address tag from tag RAM 41, the cache index portion and the line offset portion of the read address are used to access a data word within data store 43. This data word is placed on a data store output 68. When a valid signal is placed on line 61 multiplexor 63 connects data output 68 to lines 12. The data word on lines 12 is returned to processor 1. When the address tag from tag RAM 41 and the address tag of the read address are not equal, an invalid signal is placed by comparator 49 on line 61 signifying that a miss has occurred.

At the same time cache index is being used by tag RAM 41 and data store 4D, the cache index is also used by tag RAM 42 and data store 44. The cache index portion of the read address is used to access from tag RAM 42 the address tag of the current data line in data store 44 at the location specified by the cache index. Tag RAM 42 writes out the address tag on lines 48. Comparator 50 compares the address tag from tag RAM 42 and the address tag of the read address. If these are equal, comparator 50 produces a valid signal on a line 62. The valid signal is forwarded to multiplexor 63, logical OR gate 60 and gate 65. However, during a cache read cycle a control signal on an input 67 of gate 65 disables gate 65 not allowing the valid signal on line 62 to reach a write enable input line 72 of data store 43.

Simultaneous to the access of an address tag from tag RAM 42, the cache index portion and the line offset portion of the read address are used to access a data word within data store 44. This data word is placed on a data store output 69. When a valid signal is placed on line 62 multiplexor 63 connects data output 69 to lines 12. The data word on lines 12 is returned to processor 1. When the address tag from tag RAM 42 and the address tag of the read address are not equal, an invalid signal is placed by comparator 50 on line 62 signifying that a miss has occurred.

When comparator 49 and comparator 50 both produce an invalid signal there is a cache miss. Then a line of data containing the word addressed by the read address is fetched from main memory 3 and placed in either data store 43 or data store 44. The address tag for the fetched data line is simultaneously placed respectively in either tag RAM 41 or tag RAM 42.

Comparator 49 and comparator 50 should not both produce a valid signal. If they do a system error has occurred.

When processor 1 desires to write data to cache 2, processor 1 places a write address of data to be written lines 11. Processor 1 also places the data to be written on onto lines 10. The cache index portion of the write address is used to access from tag RAM 41 the address tag of the current data line in data store 43 at the location specified by the cache index. Tag RAM 41 writes out the address tag on lines 47. Comparator 49 compares the address tag from tag RAM 41 and the address tag of the write address. If these are equal, comparator 49 produces a valid signal on line 61. The valid signal is forwarded to gate 64. During a cache write cycle the control signal on input 66 of gate 64 enables gate 64 allowing the valid signal on line 61 to reach write enable input line 71 of data store 43.

Simultaneous to the access of an address tag from tag RAM 41, the cache index portion and the line offset portion of the write address are used to address a memory location in data store 43. Also, the data on lines 10 is applied to the data input of data store 43. When a valid signal is placed on line 61, the data word on line 10 is placed in data store 43 at the memory location specified by the cache index portion and the line offset portion of the address lines. When the address tag from tag RAM 41 and the address tag of the read address are not equal, an invalid signal is placed by comparator 49 on line 61 signifying that a miss has occurred.

At the same time cache index is being used by tag RAM 41 and data store 43, the cache index is also used by tag RAM 42 and data store 44. The cache index portion of the write address is used to access from tag RAM 42 the address tag of the current data line in data store 44 at the location specified by the cache index. Tag RAM 42 writes out the address tag on lines 48. Comparator 50 compares the address tag from tag RAM 42 and the address tag of the write address. If these are equal, comparator 50 produces a valid signal on line 61. The valid signal is forwarded to gate 65. During a cache write cycle the control signal on input 67 of gate 65 enables gate 65 allowing the valid signal on line 62 to reach write enable input line 72 of data store 44.

Simultaneous to the access of an address tag from tag RAM 42, the cache index portion and the line offset portion of the write address are used to address a memory location in data store 44. Also, the data on lines 10 is applied to the data input of data store 44. When a valid signal is placed on line 62, the data word on line 10 is placed in data store 44 at the memory location specified by the cache index portion and the line offset portion of the address lines. When the address tag from tag RAM 42 and the address tag of the read address are not equal, an invalid signal is placed by comparator 50 on line 62 signifying that a miss has occurred.

When both comparator 49 and comparator 50 indicate that a miss has occurred, then a line of data containing the word addressed by the write address is fetched from main memory 3 and placed in either data store 43 or data store 44. The victim line which is replaced in data store 43 or data store 44 is, if dirty, written back to main memory 3 or if not dirty, deleted or overwritten. The address tag for the fetched data line is simultaneously placed respectively in either tag RAM 41 or tag RAM 42. The new word may then be written into the appropriate data store.

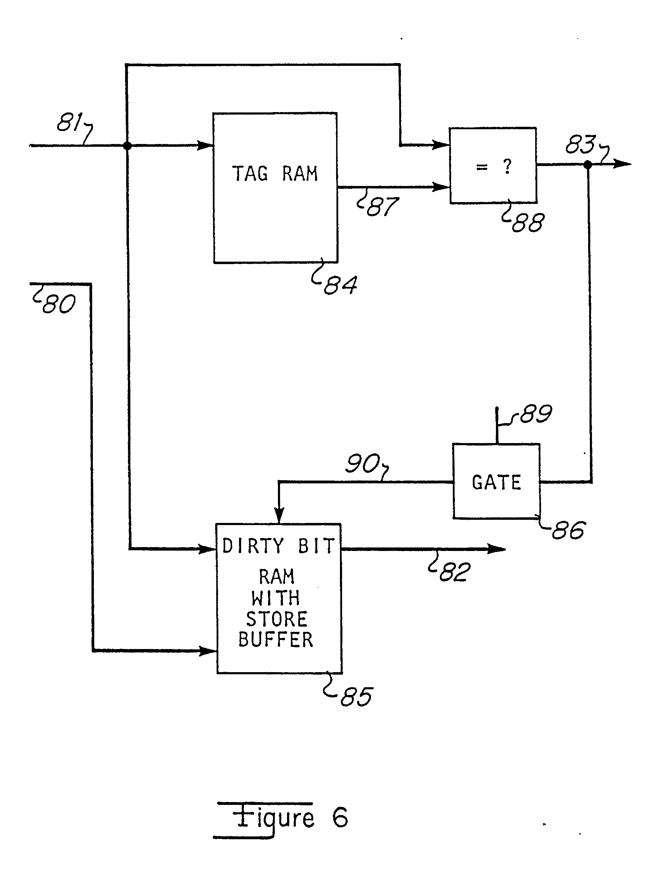

Figure 6 shows how a store buffer may be used in storing a dirty bit. The dirty bit indicates that data in a data block has been modified, and thus before the data block is deleted from the cache the modified data must be written into main memory. When processor 1 writes data into a data RAM, a corresponding dirty bit is set indicating the data has been modified. When processor 1 is ready to delete from the cache a data block, the dirty bit is checked to see if the data block needs to be copied back to memory.

The dirty bit storage device includes a tag RAM 84, a dirty bit RAM with store buffer (dirty bit store) 85, a comparator 88 and a gate 86.

Each dirty bit in dirty bit store 85 is addressed using cache index 122. For each dirty bit stored in dirty bit store 85, an address tag is stored in tag RAM 84. The same cache index is used to address both the address tag in tag RAM 84 and the associated dirty bit in dirty bit store 85.

When processor 1 desires to delete data from the cache, processor 1 places a read address of data to be deleted on lines 81. The cache index portion of the read address is used to access from tag RAM 84 the address tag of the bit in dirty bit store 85 at the location specified by the cache index. Tag RAM 84 writes out the address tag on lines 87. Comparator 88 compares the address tag from tag RAM 84 and the address tag of the read address. If these are equal, comparator 88 produces a valid signal on a line 83. The valid signal is forwarded to gate 86. However, during a cache read cycle a control signal on an input 89 of gate 86 disables gate 86 not allowing the valid signal on line 83 to reach a write enable input line 90 of dirty bit store 85.

Simultaneous to the access of an address tag from tag RAM 84, the cache index portion and the line offset portion of the read address are used to access a bit within dirty bit store 85. This bit is placed on a line 82. When the address tag from tag RAM 84 and the address tag of the read address are not equal, an invalid signal is placed by comparator 88 on line 83 signifying that a miss has occurred. Then the bit on line 82 is returned to processor 1 either immediately or at a subsequent access. If the bit is a logical "1", the data block in the cache is dirty and must be down loaded to the main memory before deletion. Otherwise, processor 1 may delete the data block without down loading the data block to the main memory.

When processor 1 writes data to the cache the corresponding dirty bit is set. Processor 1 places a write address of data to be written on lines 81. Processor 1 also places a logic "1" (indicating the data is dirty) onto line 80. The cache index portion of the write address is used to access from tag RAM 84 the address tag of the current bit in dirty bit store 85 at the location specified by the cache index. Tag RAM 84 writes out the address tag on lines 87. Comparator 88 compares the address tag from tag RAM 84 and the address tag of the write address. If these are equal, comparator 88 produces a valid signal on line 83. The valid signal is forwarded to gate 86. During a dirty bit write cycle the control signal on input 89 of gate 86 enables gate 86 allowing the valid signal on line 83 to reach write enable input line 90 of dirty bit store 85.

Simultaneous to the access of an address tag from tag RAM 84, the cache index portion of the write address are used to address a memory location in dirty bit store 85. Also, the logic "1" on line 80 is applied to the data input of dirty bit store 85. When a valid signal is placed on line 83, the data bit on line 80 is placed in dirty bit store 85 at the memory location specified by the cache index portion of the address lines. When the address tag from tag RAM 84 and the address tag of the read address are not equal, an invalid signal is placed by comparator 88 on line 83 signifying that a miss has occurred. The dirty bit is not written into dirty bit store 85. Instead, immediately or during a following cache cycle the victim line's dirty bit is read to determine whether the victim line needs to be returned to main memory 3 or whether the victim line may be overwritten.

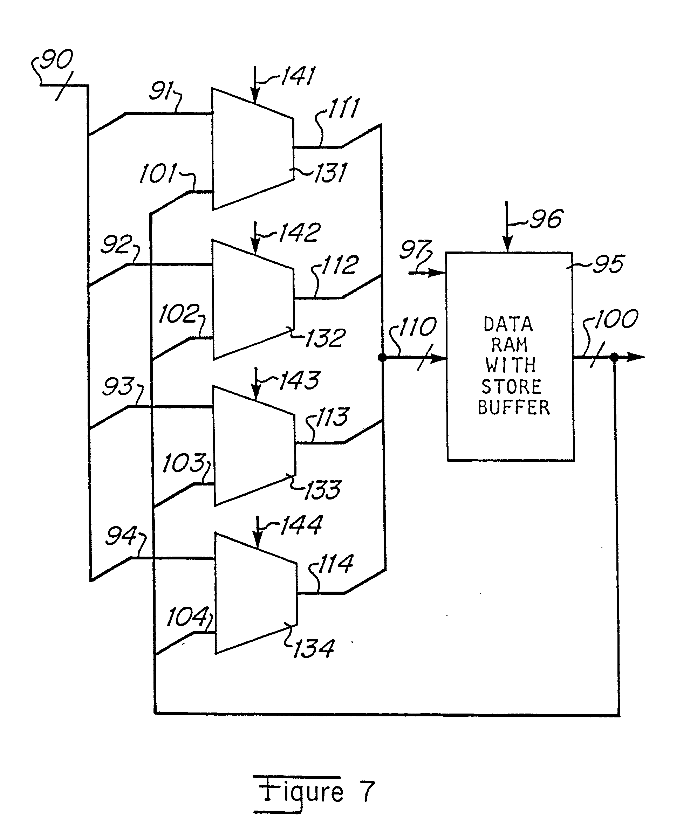

Figure 7 shows an arrangement using a data RAM with store buffer (data store) 95 allowing for single cycle partial word stores within data store 95. Data store 95, for example, stores thirty-two bit words in eight-bit segments.

When a data word is placed upon lines 90, an eight bit segment is placed on each of lines 91, lines 92, lines 93 and line 94. Similarly when data store 95 places a word on lines 100, an eight bit segment is placed on each of lines 101, lines 102, lines 103 and lines 104. Lines 91 and lines 101 serve as input to a data multiplexor 131. Lines 92 and lines 102 serve as input to a data multiplexor 132. Lines 93 and lines 103 serve as input to a data multiplexor 133. Lines 94 and lines 104 serve as input to a data multiplexor 134. A control line 141 instructs multiplexor 131 to select either lines 91 or lines 101 to be connected to lines 111. A control line 142 instructs multiplexor 132 to select either lines 92 or lines 102 to be connected to lines 112. A control line 143 instructs multiplexor 133 to select either lines 93 or lines 103 to be connected to lines 113. A control line 144 instructs multiplexor 134 to select either lines 94 or lines 104 to be connected to lines 114. The data on lines 111, lines 112, lines 113 and lines 114 are applied to input 110 of data store 95.

When a partial word store is to be performed, address lines 97 are used to select the location within data store 95 where the data is to be placed. The data word currently stored at the selected address appears on lines 100. The new data is placed in one or more bytes of lines 90. Control lines 141, 142, 143 and 144 are used to instruct multiplexors 131, 132, 133, 134 to select the appropriate bytes of data to be applied to input 110. After the data has settled on input 110, write enable 96 is activated. The store buffer within data store 95 allows the write enable to occur late in the write cycle thus facilitating the single cycle partial word store. In order for the partial word store to operate correctly the contents of the data register within data store 95 must be written into the data RAM before another partial word store is attempted. This may done in an otherwise idle memory cycle.

## Claims

1. In a cache memory (2) located between a processor (1) and a main memory (3), the cache memory (2) having a first random access memory (30) in which is stored blocks of data, a first buffer (22) to the first random access memory (30), a second buffer (21) to the first random access memory (30) and a second random access memory (14) in which is stored address tags (121) identifying locations in the main memory (3) where the blocks of data stored in the first random access memory (30) are also stored, a method for writing write data from the processor (1) into the cache memory (2) as a substitute for writing the write data directly into the main memory (3) at a memory address (120), the method comprising the steps of:

(a) storing contents of the first buffer (22) in the first random access memory (30) at a location in the first random access memory (30) specified by contents of the second buffer (21);

(b) presenting an index portion (122) of the memory address (120) to the second random access memory (14) to access an address tag (121) stored at a memory location in the second random access memory (14) addressed by the index portion (122);

(c) comparing a tag portion of the memory address (120) with the address tag (121) accessed from the second random access memory (14); and,

(d) when the comparison in step (c) indicates the tag portion of the memory address (120) is equal to the address tag (121) accessed from the second random access memory (14), writing the write data into the first buffer (22) and writing the index portion (122) of the memory address (120) into the second buffer (21).

2. In a cache memory (2) located between a processor (1) and a main memory (3), the cache memory (2) having a first random access memory (30) in which is stored blocks of data, a first buffer (22) to the first random access memory (30), a second buffer (21) to the first random access memory (30) and a second random access memory (14) in which is stored address tags (121) identifying locations in the main memory (3) where the blocks of data stored in the first random access memory (30) are also stored, a method for reading read data from the cache memory (2) as a substitute for reading the read data directly from a memory location of the main memory (3) having a memory address (120), the method comprising the steps of:

(a) presenting an index portion (122) of the memory address (120) to the second random access memory (14) to access an address tag (121) stored at a memory location in the second random access memory (14) addressed by the index portion (122);

(b) comparing a tag portion of the memory address (120) with the address tag (121) accessed from the second random access memory (14); and,

(c) when the comparison in step (b) indicates the tag portion of the memory address (120) is equal to the address tag (121) accessed from the second random access memory (14) performing the following substeps,

(c1) comparing the index portion (122) of the memory address (120) with the contents of the second buffer (21),

(c2) when the comparison in step (c1) indicates the index portion (122) of the memory address (120) equals the contents of the second buffer (21), forwarding the contents of the first buffer (22) to the processor (1), and

(c3) when the comparison in step (c1) indicates the index portion (122) of the memory address (120) does not equal the contents of the second buffer (21), using the index portion (122) of the memory address (120) to access stored data stored in the first random access memory (30) and forwarding the stored data to the processor (1).

3. In a computing system having a processor (1) and a main memory (3), a cache (2) comprising: a first random access memory (14) in which is stored address tags (121), the first random access memory (14) having an address index input (11) onto which an index portion (122) of an address may be applied and a data output (17) onto which the first random access memory (14) places a particular address tag (121) dependent upon data applied to the address index input (11); first comparator means (18), coupled to the data output (17) of the first random access memory (14), for comparing the particular address tag (121) placed on the data output (17) with an address tag (121) portion of the address, the first comparator means (18) producing a valid signal on an output (13) when the particular address tag (121) and the address tag (121) portion of the address are equal, and the first comparator means (18) producing an invalid signal on the output (13) when the particular address tag (121) and the address tag (121) portion of the address are unequal; gate means (16), having a gate input coupled to the output (13) of the first comparator means (18) and a gate output (20), for, responsive to a control signal, electrically coupling the gate input to the gate output (20) when a write to the cache (2) is being performed and for electrically isolating the gate input from the gate output (20) when a read from the cab (2) is being performed;

a first buffer (22), having a write enable (20), input lines (10) and output lines, data to be stored in the cache (2) being placed on the input lines (10) of the first buffer (22), values on the output lines being determined by the contents of the first buffer (22), and the write enable (20) being electrically coupled to the gate output (20) and data being entered on the input lines (10) into the first buffer (22) responsive to the gate means (16) electrically coupling a valid signal through to the gate output (20);

a second buffer (21), having a write enable (20), input lines (11) and output lines, an index of of an address of data to be stored in the cache (2) being placed on the input lines (11) of the second buffer (21), values on the output lines of the second buffer (21) being determined by the contents of the second buffer (21), the write enable (20) being electrically coupled to the gate output (20), and index on the input lines (11) of the second buffer (21) being entered into the second buffer (21) responsive to the gate means (16) electrically coupling a valid signal through to the gate output (20);

a second random access memory (30) in which is stored cache data, the second random access memory (30) having an address input (25), a cache data input (26) coupled to the output lines of the first buffer (22), and a data output (27) onto which the second random access memory (30) places cache data dependent upon the value of the index placed on the address input (25);

a first multiplexing means (23) for responsive to a control signal selecting a first of a value on the output lines of the second buffer (21) and the index portion (122) of the address to apply to the address input (25) of the second random access memory (30);

second comparator means (24) for comparing the value on the output lines of the second buffer (21) with the index portion (122) of the address; and

second multiplexing means (28), responsive to the comparison performed by the second comparator means (24), for selecting a first of a value on the output lines of the first buffer (22) and the cache data placed on the data output (27) of the second random access memory (30).

4. A computing system as in Claim 3 wherein the cache data are dirty bits.

5. In a cache memory (2) located between a processor (1) and a main memory (3), the cache memory (2) having a first random access memory (30) in which is stored dirty bits for blocks of data stored in the cache memory (2), a first buffer (22) to the first random access memory (30), a second buffer (21) to the first random access memory (30) and a second random access memory (84) in which is stored address tags (121), a method for setting a dirty bit within the first random access memory (30) when the processor (1) changes a data block within the cache memory (2), the data block simultaneously existing in the main memory (3) at a memory address (120), the method comprising the steps of:

(a) storing contents of the first buffer (22) in the first random access memory (30) at a location in the first random access memory (30) specified by contents of the second buffer (21);

(b) presenting an index portion (122) of the memory address (120) to the second random access memory (84) to access an address tag (121) stored at a memory location in the second random access memory (84) addressed by the index portion (122);

(c) comparing a tag portion of the memory address (120) with the address tag (121) accessed from the second random access memory (84); and,

(d) when the comparison in step (c) indicates the tag portion of the memory address (120) is equal to the address tag (121) accessed from the second random access memory (84), writing the dirty bit into the first buffer (22) and writing the index portion (122) of the memory address (120) into the second buffer (21).

6. A method as in Claim 5 additionally comprising the step of:

(e) when the comparison in step (c) indicates the tag portion of the memory address (120) is not equal to the address tag (121) accessed from the second random access memory (84), reading a dirty bit from a location within the first random access indicated by the index portion (122) of the memory address (120).

7. In a cache memory (2) located between a processor (1) and a main memory (3), the cache memory (2) having a first random access memory (30) in which is stored dirty bits for blocks of data stored in the cache memory (2), a first buffer (22) to the first random access memory (30), a second buffer (21) to the first random access memory (30) and a second random access memory (84) in which is stored address tags (121), a method for reading a dirty bit from the cache memory (2) when the processor (1) is determining whether a data block needs to be written to a memory address (120) in the main memory (3) before the data block is deleted from the cache, the method comprising the steps of:

(a) presenting an index portion (122) of the memory address (120) to the second random access memory (84) to access an address tag (121) stored at a memory location in the second random access memory (84) addressed by the index portion (122);

(b) comparing a tag portion of the memory address (120) with the address tag (121) accessed from the second random access memory (84); and,

(c) when the comparison in step (b) indicates the tag portion of the memory address (120) is equal to the address tag (121) accessed from the second random access memory (84) performing the following substeps,

(c1) comparing the index portion (122) of the memory address (120) with the contents of the second buffer (21),

(c2) when the comparison in step (c1) indicates the index portion (122) of the memory address (120) equals the contents of the second buffer (21), forwarding the contents of the first buffer (22) to the processor (1), and

(c3) when the comparison in step (c1) indicates the index portion (122) of the memory address (120) does not equal the contents of the second buffer (21), using the index portion (122) of the memory address (120) to access a dirty bit stored in the first random access memory (30) and forwarding the dirty bit to the processor (1).

8. In a cache memory (2) located between a processor (1) and a main memory (3), the cache memory (2) having a first plurality of random access memories (30) in which are stored blocks of data, a second plurality of random access memories (41,42) in which are stored address tags (121) identifying locations in the main memory (3) where the blocks of data stored in the first plurality of random access memories (30) are also stored, a first plurality of buffers (22) each buffer in the first plurality of buffers (22) having an associated random access memory from the first plurality of random access memories (30), and a second plurality of buffers (21) each buffer from the second plurality of buffers (21) having an associated random access memory from the first plurality of random access memory, a method for writing data from the processor (1) into the cache memory (2) as a substitute for writing the data directly into the main memory (3) at a memory address (120), the method comprising the steps of:

(a) storing contents of each buffer in the first plurality of buffers (22) in its associated random access memory from the first plurality of random access memories (30) at a location in each of the first plurality of random access memories (30) specified by contents of a buffer from the second plurality of buffers (21);

(b) presenting an index portion (122) of the memory address (120) to each random access memory in the second plurality of random access memories (41,42) to access an address tag (121) stored at a memory location in each of the second plurality of random access memories (41,42) addressed by the index portion (122);

(c) comparing a tag portion of the memory address (120) with the address tag (121) accessed from each of the second plurality of random access memories (41,42); and,

(d) when the comparison in step (c) indicates the tag portion of the memory address (120) is equal to an address tag (121) accessed from a first of the second plurality of random access memories (41,42), writing the data into a first of the first plurality of buffers (22) which is associated with the first of the second plurality of random access memories (41,42) and writing the index portion (122) of the memory address (120) into a first of the second plurality of buffers (21) which is associated with the first of the second plurality of random access memories (41,42).

9. In a cache memory (2) located between a processor (1) and a main memory (3), the cache memory (2) having a first plurality of random access memories (30) in which are stored blocks of data, a second plurality of random access memories (41,42) in which are stored address tags (121) identifying locations in the main memory (3) where the blocks of data stored in the first plurality of random access memories (30) are also stored, a first plurality of buffers (22) each buffer in the first plurality of buffers (22) having an associated random access memory from the first plurality of random access memories (30), and a second plurality of buffers (21) each buffer from the second plurality of buffers (21) having an associated random access memory from the first plurality of random access memories (30) and an associated random access memory from the second plurality of random access memories (41,42), a method for reading data from the cache memory (2) as a substitute for reading the data directly from a memory location of the main memory (3) having a memory address (120), the method comprising the steps of:

(a) presenting an index portion (122) of the memory address (120) to each random access memory in the second plurality of random access memories (41,42) to access an address tag (121) stored at a memory location in each of the second plurality of random access memories (41,42) addressed by the index portion (122);

(b) comparing a tag portion of the memory address (120) with the address tag (121) accessed from each of the second plurality of random access memories (41,42); and,

(c) when a comparison in step (b) indicates the tag portion of the memory address (120) is equal to a first address tag (121) accessed from a first of the second plurality of random access memories (41,42) performing the following substeps,

(c1) comparing the index portion (122) of the memory address (120) with the contents of a first from the second plurality of buffers (21) which is associated with the first from the second plurality of random access memories (41,42),

(c2) when the comparison in step (c1) indicates the index portion (122) of the memory address (120) equals the contents of the first from the second plurality of buffers (21), forwarding to the processor (1) the contents of a first from the first plurality of buffers (22) which is associated with the first from the second plurality of random access memories (41,42), and

(c3) when the comparison in step (c1) indicates the index portion (122) of the memory address (120) does not equal the contents of the first of the second plurality of buffers (21), using the index portion (122) of the memory address (120) to access stored data stored in a first of the first plurality of random access memories (30) which is associated with the first of the second plurality of random access memories (41,42) and forwarding the stored data to the processor (1).

10. In a computing system having a processor (1) and a main memory (3), a cache comprising:

a first plurality of random access memories (41,42) in which are stored address tags (121), the first plurality of random access memories (41,42) each having an address index input (11) onto which an index portion (122) of an address may be applied and a data output onto which each of the first plurality of random access memories (41,42) places a particular address tag (121) dependent upon data applied to the address index input (11);

a first plurality of comparator means (49,50), one from the first plurality of comparator means (49,50) being coupled to the data output of each of the first plurality of random access memories (41,42), for comparing the particular address tag (121) placed on the data output of each of the first plurality of random access memories (41,42) with an address tag (121) portion of the address, each comparator means producing a valid signal on an output when the particular address tag (121) and the address tag (121) portion of the address are equal, and each comparator means producing an invalid signal on the output when the particular address tag (121) and the address tag (121) portion of the address are unequal;

a plurality of gate means (64,65), each having a gate input coupled to an output of one of the first plurality of comparator means (49,50) and having a gate output, for, responsive to a control signal, electrically coupling the gate input to the gate output when a write to the cache is being performed and for electrically isolating the gate input from the gate output when a read from the cache is being performed;

a first plurality of buffers (22), each having a write enable, input lines (10,11) and output lines, data to be stored in the cache being placed on the input lines (10) of each of the first plurality of buffers (22), values on the output lines being determined by the contents of each of the first plurality of buffers (22), and the write enable of each of the first plurality of buffers (22) being electrically coupled to a gate output of a gate means from the first plurality of gate means (64,65) and data being entered on the input lines (10) into each of the first plurality of buffers (22) responsive to the gate means electrically coupling a valid signal through to the gate output of the gate means;

a second plurality of buffers (21), each having a write enable, input lines (11) and output lines, an index of data to be stored in the cache being placed on the input lines (11) of each of the second plurality of buffers (21), each write enable being electrically coupled to a gate output of a gate means from the first plurality of gate means (64,65) and data on the input lines (11) of each of the second plurality of buffers (21) being entered into each of the second plurality of buffers (21) responsive to the gate means electrically coupling a valid signal through to the gate output of the gate means;

a second plurality of random access memories (30) in which is stored cache data, each of the second plurality of random access memories (30) having an address input (25), a cache data input (26) coupled to the output lines of the first buffer (22), and a data output onto which each of the second plurality of random access memories (30) places cache data dependent upon an index placed on the address input (25);

a first plurality of multiplexing means (23), each for, responsive to a control signal, selecting a first of a value on the output lines of a buffer from the second plurality of buffers (21) and the index portion (122) of the address to apply to the address input (25) of one of the second plurality of random access memories (30);

a second plurality of comparator means (24) for comparing a value on the output lines of each of the second plurality of buffers (21) with the index portion (122) of the address; and

a second plurality of multiplexing means (28), each responsive to a comparison performed by one of the second plurality of comparator means (24), for selecting a first of the values on the output lines of one of the first plurality of buffers (22) and the cache data placed on the data output of an associated random access memory from the second plurality of random access memories (30).

11. A computing system as in Claim 10 wherein the cache data are dirty bits.

12. In a cache memory (2) located between a processor (1) and a main memory (3), the cache memory (2) having a random access memory (30,95) in which is stored words of data, a first buffer (22) to the random access memory (30,95) and a second buffer (21) to the random access memory (30,95), a method for performing a partial word store of a first plurality of bits of data into the cache memory (2), the method comprising the steps of:

(a) storing contents of the first buffer (22) in the random access memory (30,95) at a location in the random access memory (30,95) specified by contents of the second buffer (21);

(b) presenting an index to the random access memory (30,95) to access a word in the random access memory (30,95) into which the first plurality of bits of data is to be stored;

(c) modifying the word accessed from the random access memory (30,95) to include the first plurality of bits of data; and,

(d) writing the modified word into the first buffer (22) and the index into the second buffer (21);

13. In a computing system a storage device capable of performing single cycle partial word storage of a first plurality of bits placed on device input lines (90), the storage device comprising:

a first buffer (22), having a write enable, input lines (10) and output lines, values on the output lines being determined by the contents of' the first buffer (22), and the write enable;

a second buffer (21), having a write enable, input lines (11) and output lines, values on the output lines of the second buffer (21) being determined by the contents of the second buffer (21);

a random access memory (30,95) in which is stored cache data, the random access memory (30,95) having an address input (25), a cache data input (26) coupled to the output lines of the first buffer (22), and a data output onto which the random access memory (30,95) places cache data dependent upon the value of the index placed on the address input (25);

first multiplexing means (23) for responsive to a control signal selecting a first of a value on the output lines of the second buffer (21) and the index portion (122) of the address to apply to the address input (25) of the random access memory (30,95);

comparator means (24) for comparing the value on the output lines of the second buffer (21) with the index portion (122) of the address;

second multiplexing means (28), having output lines, for, responsive to the comparison performed by the comparator means (24), selecting a first of a value on the output lines of the first buffer (22) and the cache data placed on the data output of the random access memory (30,95) to be placed upon the output lines of the second multiplexing means (28); and,

data selection means (131, 132, 133, 134), having input lines coupled to the output lines of the second multiplexing means (28) and to the device input lines (90) and output lines coupled to the input lines (10) of the first buffer (22), for, responsive to a control signal, producing modifying data on the output lines of the data selection means (131, 132, 133, 134) by modifying data placed on the input lines of the data selection means (131, 132, 133, 134) to include the plurality of bits placed on the device input lines (90).

Figure 1

Figure 2

ADDRESS

| | | | |
|---|---|---|---|
| ADDRESS TAG | CACHE INDEX | LINE OFFSET | BYTE OFFSET |

0 --- 20 21- - -25 26 - - -29 30 - - - 31

120

121  122  123  124

Figure 3

Figure 4

EP 0 400 851 A2

Figure 5

Figure 6

Figure 7